# EUROPEAN PATENT SPECIFICATION

(11) **EP 3 480 358 B1**
(45) Date of publication and mention of the grant of the patent: **16.09.2020**
(21) Application number: 18382775.7
(22) Date of filing: 31.10.2018
(51) Int. Cl.: E01B 25/26

(54) **SWITCH SYSTEM FOR RAIL-GUIDED VEHICLE-BASED TRANSPORT SYSTEMS**
WEICHENSYSTEM FÜR SCHIENENGEFÜHRTE FAHRZEUGBASIERTE TRANSPORTSYSTEME
SYSTÈME D'AIGUILLAGE POUR SYSTÈMES DE TRANSPORT DE VÉHICULE SUR RAILS

(30) Priority: 02.11.2017 ES 201731276
(43) Date of publication of application: 08.05.2019
(73) Proprietor: Mecalux S.A, 08940 Cornella de Llobregat (Barcelona) (ES)
(72) Inventor: FORÉS RÀFOLS, Albert, 08940 CORNELLA DE LLOBREGAT (Barcelona) (ES)
(74) Representative: Herrero & Asociados, S.L.

(56) References cited:
- WO-A2-2008/009829
- CN-A- 101 481 040
- FR-A1- 2 437 465
- GB-A- 886 454
- GB-A- 2 539 301
- JP-A- S56 159 401
- US-A- 1 435 608
- US-A- 3 204 575
- US-A- 4 597 334

## Description

The present invention relates to a switch system for rail-guided vehicle-based transport systems, particularly in self-propelled vehicles.

### Background of the Invention

In the field of materials handling, there are different ways of moving the loads into a warehouse. One of the various systems is the so-called floor-mounted electrified monorails or rail-guided vehicles. These systems are in charge of moving loads between different areas of installations on vehicles, whether from one side of the warehouse to the other, or in connection with moving loads from production areas towards the warehouse.

In rail-guided vehicles systems, the vehicles travel along rails, the circuit can be a closed loop without alternative tracks, or rotatable-type switch systems can be used.

When switch systems are used, the vehicle must stop as it approaches the switch, the switch system rotates in order to orient it as desired, and once it has been oriented correctly, the vehicle moves again. This entails a significant loss of time in each cycle.

These switch systems normally comprise a rotatable turntable provided with rails, and the position of the rotatable turntable depends on the path the vehicle is to take.

An example of switch systems of this type is described in patent document US 2010147183 A1, which relates to a switch system provided with two straight rails and two curved rails which are mounted on a rotatable turntable and allow defining a plurality of positions.

GB886454 A discloses a rotary switch having at least two rail elements of which the ends lie on a circle of radius r having its centre on the rotary axis of the switch, one of the elements being of arcuate shape and the other being rectilinear and extending tangentially to a geometric circle.

JPS56159401 A discloses a switching device comprising a fixed track, a plurality of sets of branch tracks radiated from the end of the fixed track, and a branching device provided between the fixed track and the branch track.

Therefore, an objective of the present invention is to provide a switch system for rail-guided vehicle-based transport systems that is as simple and as economical as possible, that prevents vehicles from stopping as they approach the switch system when said switch system changes its position, and allows the free passage of the vehicle, without the rails hindering the passage of the wheels of the vehicle.

### Description of the Invention

The aforementioned drawbacks are successfully resolved with the switch system of the invention as described in claim 1, while having other advantages that will be described below.

The switch system for rail-guided vehicle-based transport systems according to the present invention comprises a turntable provided with a straight rail and a curved rail integral with said turntable, said turntable being rotatable about a rotating shaft, and the switch system only has one straight rail and one curved rail, said rotating shaft being arranged such that it is shifted with respect to said straight rail and said curved rail.

Furthermore, said rotating shaft is arranged between the straight rail and the curved rail, and said rotating shaft is arranged equidistantly from the respective midpoints of the straight rail and of the curved rail.

The switch system for rail-guided vehicle-based transport systems according to the present invention also advantageously comprises a motor driving the rotatable turntable, said motor being mounted on the rotatable turntable.

According to a preferred embodiment, the turntable has a rectangular layout defining first and second long sides and first and second short sides, the straight rail being arranged next to the first long side and the curved rail being placed such that it passes through the corners defined by the second long side and the first and second short sides, and the motor is preferably mounted on the second long side.

Advantageously, said turntable comprises a plurality of wheels, and said wheels are preferably facing the rotating shaft, and arranged on the long sides of the turntable.

Said turntable is preferably rotatable between a plurality of positions, said positions being shifted 45° from one another. Particularly, it can be placed in a first position, in which position the straight rail is used, in a second position, shifted 45° with respect to the first position in one direction, and in a third position, shifted 45° with respect to the first position in the opposite direction, in which positions the curved rail is used.

With the switch system for rail-guided vehicle-based transport systems according to the present invention, at least the following advantages are achieved:
- the vehicle used in the transport system is prevented from stopping before reaching the switch system, where it can perform a continuous movement, with the subsequent time savings;
- using a single straight rail and a single curved rail simplifies the system and lowers its cost;
- the arrangement of the rotating shaft such that it is shifted with respect to the rails allows the rotation of the turntable not to affect the passage of the vehicle, specifically its wheels; and
- the placement of the motor mounted on the rotatable turntable itself also allows the rotation of the turntable not to affect the passage of the vehicle.

### Brief Description of the Drawings

To better understand the preceding description, a set of drawings is attached in which a practical embodiment is shown schematically and merely by way of non-limiting example.
Figure 1 is a plan view of the switch system according to the present invention, in a first position;
Figure 2 is a plan view of the switch system according to the present invention, in a second position; and
Figure 3 is a plan view of the switch system according to the present invention, in a third position.

### Description of a Preferred Embodiment

As is shown in the drawings, the switch system for rail-guided vehicle-based transport systems according to the present invention comprises a turntable 1 provided with a single straight rail 2 and a single curved rail 3 which are integral in rotation with said turntable, such that they rotate as the turntable 1 rotates.

Said turntable 1 is rotatable about a rotating shaft 4 which, in the usage position, is substantially vertical, since the turntable is supported on the floor, for example, of a warehouse.

Said rotating shaft 4 is arranged such that it is shifted with respect to said rails; particularly, it is arranged between said straight rail 2 and said curved rail 3, more specifically at the same distance from both rails 2, 3 and aligned with the midpoints of the straight rail 2 and of the curved rail 3, as can be seen in the drawings.

The turntable 1 according to the depicted embodiment has a rectangular layout, although it could be of any other suitable shape, and defines a first long side 11, a second long side 13, and two short sides 12.

According to this embodiment, the straight rail 2 is arranged next to the first long side 11, whereas the curved rail 3 is arranged such that it passes through the corners defined by the second long side 13 and the short sides 12 of the turntable 1.

In order to rotate, the turntable 1 comprises a motor 5 mounted thereon, which rotates with the turntable 1 as it is integral therewith. Said motor 5 according to the depicted embodiment is mounted on the second long side 13 of the turntable 1.

The turntable 1 also comprises a plurality of wheels 6 in order to rotate. These wheels are arranged on the long sides 11, 13 of the turntable, according to the depicted embodiment.

Particularly, the wheels 6 are grouped in pairs and aligned with the rotating shaft 4 of the turntable 1, i.e., the extension of the rotating shaft of each pair of wheels 6 crosses the rotating shaft 4 of the turntable 1, the assembly of wheels 6 defining a path circular when said turntable 1 rotates.

It must be indicated that the switch system according to the present invention is specifically designed to be used with rail-guided self-propelled vehicles (not depicted in the drawings), comprising four wheels, two of which are guided by the rails and the other two travel along the floor. This type of vehicle is not described in detail because it is not part of the present invention and because they are known by those skilled in the art.

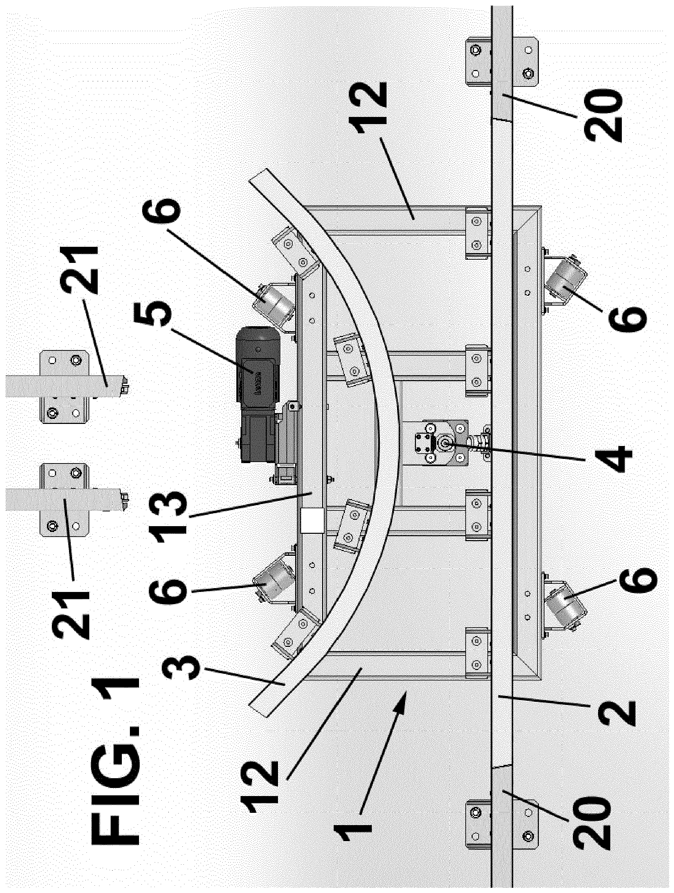

The switch system according to the present invention can be placed in a plurality of positions; specifically, it can be placed in the three positions that are shown in Figures 1 to 3.

A first position of the switch system is shown in Figure 1, and in this position the straight rail is used 2 for guiding the corresponding vehicle. As shown in this drawing, the straight rail 2 will be aligned and connect with first rails 20 that are fixed in the transport installation.

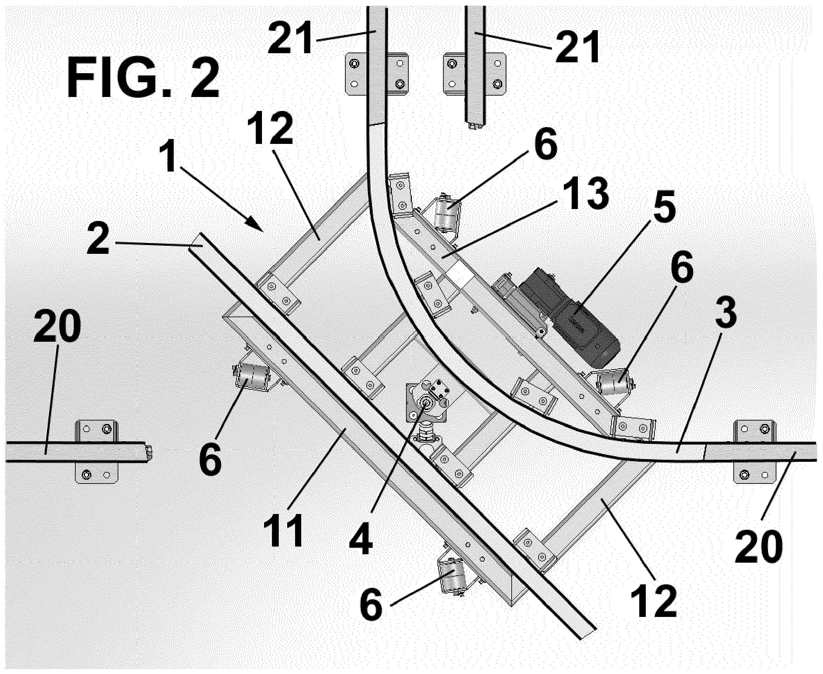

A second position of the switch system is shown in Figure 2, and in this position the curved rail is used 3 for guiding the corresponding vehicle. In this position, the curved rail 3 connects one of said first fixed rails 20 with a second, also fixed rail 21 of the installation. With respect to the first position shown in Figure 1, this second position has been shifted 45° clockwise.

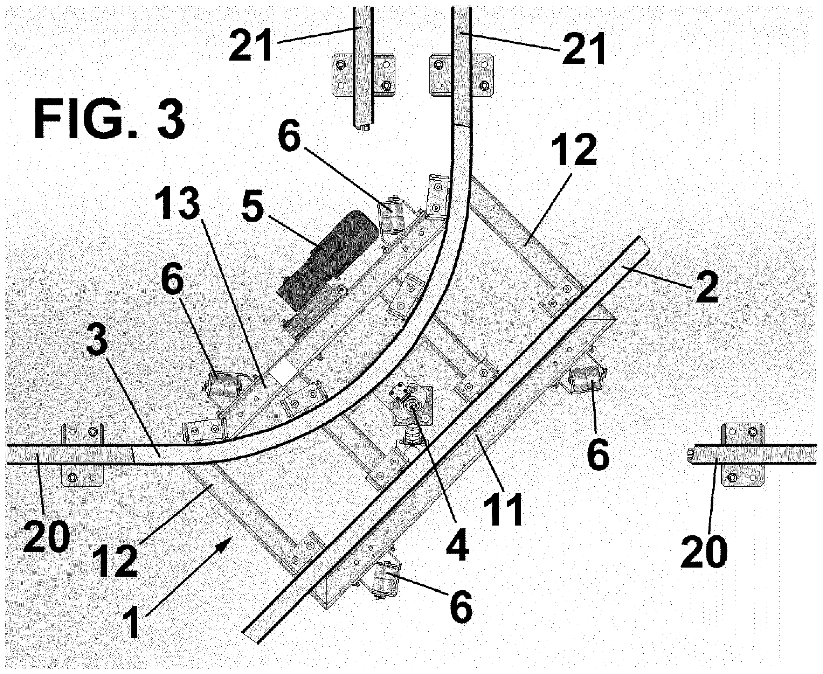

A third position of the switch system is shown in Figure 3, and in this position the curved rail is used 3 for guiding the corresponding vehicle. In this position, the curved rail 3 connects one of said first fixed rails 20 with another second, also fixed rail 21 of the installation. With respect to the first position shown in Figure 1, this second position has been shifted 45° counter-clockwise.

Evidently, the switch system also comprises computerized control means to control the path the vehicles are to describe, without having to stop prior to changing the path by means of the switch system according to the present invention.

Despite having referred to a specific embodiment of the invention, it is evident for one skilled in the art that the switch system that has been described may be subject to a number of variations and modifications, provided they fall under the scope of protection defined by the attached claims.

## Claims

1. Switch system for rail-guided vehicle-based transport systems, comprising a turntable (1) provided with a straight rail (2) and a curved rail (3) integral with said turntable (1), said turntable (1) being rotatable about a rotating shaft (4), **characterized in that** the switch system only has one straight rail (2) and one curved rail (3), with said rotating shaft (4) being arranged such that it is shifted with respect to said straight rail (2) and said curved rail (3), wherein said rotating shaft (4) is arranged between the straight rail (2) and the curved rail (3),
**characterized in that** said rotating shaft (4) is arranged equidistantly from respective midpoints of the straight rail (2) and of the curved rail (3).

2. Switch system for rail-guided vehicle-based transport systems according to claim 1, also comprising a motor (5) driving the rotatable turntable (1), said motor (5) being mounted on the rotatable turntable (1).

3. Switch system for rail-guided vehicle-based transport systems according to claim 1 or 2, wherein the turntable (1) has a rectangular layout defining first and second long sides (11, 13) and first and second short sides (12), the straight rail (2) being arranged next to the first long side (11) and the curved rail (3) being placed such that it passes through the corners defined by the second long side (13) and the first and second short sides (12).

4. Switch system for rail-guided vehicle-based transport systems according to claims 2 and 3, wherein the motor (5) is mounted on the second long side (13).

5. Switch system for rail-guided vehicle-based transport systems according to claim 1, wherein said turntable (1) comprises a plurality of wheels (6).

6. Switch system for rail-guided vehicle-based transport systems according to claim 5, wherein said wheels (6) are oriented towards the rotating shaft (4).

7. Switch system for rail-guided vehicle-based transport systems according to claims 3 and 5, wherein the wheels (6) of the turntable (1) are arranged on the long sides (11, 13) of the turntable (1).

8. Switch system for rail-guided vehicle-based transport systems according to claim 1, wherein said turntable (1) is rotatable between a plurality of positions, said positions being shifted 45° from one another.

## Patentansprüche

1. Weichensystem für schienengeführte fahrzeugbasierte Transportsysteme, mit einer Drehscheibe (1), die mit einer geraden Schiene (2) und einer gebogenen Schiene (3) versehen ist, die mit der Drehscheibe (1) einstückig ausgebildet sind, wobei die Drehscheibe (1) um eine Drehwelle (4) drehbar ist, **dadurch gekennzeichnet, dass** das Weichensystem nur eine gerade Schiene (2) und eine gebogene Schiene (3) aufweist, wobei die Drehwelle (4) derart angeordnet ist, dass sie relativ zu der geraden Schiene (2) und der gebogenen Schiene (3) verschoben ist, wobei die Drehwelle (4) zwischen der geraden Schiene (2) und der gebogenen Schiene (3) angeordnet ist,
**dadurch gekennzeichnet, dass** die Drehwelle (4) abstandsgleich von entsprechenden Mittelpunkten der geraden Schiene (2) und der gebogenen Schiene (3) angeordnet ist.

2. Weichensystem für schienengeführte fahrzeugbasierte Transportsysteme nach Anspruch 1, ferner mit einem Motor (5), der die drehbare Drehscheibe (1) antreibt, wobei der Motor (5) auf der drehbaren Drehscheibe (1) montiert ist.

3. Weichensystem für schienengeführte fahrzeugbasierte Transportsysteme nach Anspruch 1 oder 2, wobei die Drehscheibe (1) einen rechteckigen Aufbau aufweist, der erste und zweite lange Seiten (11, 13) und erste und zweite kurze Seiten (12) definiert, wobei die gerade Schiene (2) neben der ersten langen Seite (11) angeordnet ist und die gebogene Schiene (3) derart platziert ist, dass sie durch die von der zweiten langen Seite (13) und den ersten und zweiten kurzen Seiten (12) definierten Ecken verläuft.

4. Weichensystem für schienengeführte fahrzeugbasierte Transportsysteme nach Anspruch 2 oder 3, wobei der Motor (5) auf der zweiten langen Seite (13) montiert ist.

5. Weichensystem für schienengeführte fahrzeugbasierte Transportsysteme nach Anspruch 1, wobei die Drehscheibe (1) mehrere Räder (6) aufweist.

6. Weichensystem für schienengeführte fahrzeugbasierte Transportsysteme nach Anspruch 5, wobei die Räder (6) in Richtung der Drehwelle (4) orientiert sind.

7. Weichensystem für schienengeführte fahrzeugbasierte Transportsysteme nach Anspruch 3 und 5, wobei die Räder (6) der Drehscheibe (1) auf den langen Seiten (11, 13) der Drehscheibe (1) angeordnet sind.

8. Weichensystem für schienengeführte fahrzeugbasierte Transportsysteme nach Anspruch 1, wobei die Drehscheibe (1) zwischen einer Vielzahl von Positionen drehbar ist, wobei die Positionen um 45° voneinander verschoben sind.

## Revendications

1. Système d'aiguillage pour systèmes de transport basés sur des véhicules guidés par rails, comprenant une plaque tournante (1) pourvue d'un rail droit (2) et d'un rail courbe (3) solidaires de ladite plaque tournante (1), ladite plaque tournante (1) rotative autour d'un arbre de rotation (4), **caractérisé en ce que** le système d'aiguillage a seulement un rail droit (2) et un rail courbe (3), ledit arbre de rotation (4) étant agencé de telle sorte qu'il est décalé par rapport audit rail droit (2) et audit rail courbe (3), ledit arbre de rotation (4) étant agencé entre le rail droit (2) et le rail courbe (3),
**caractérisé en ce que** ledit arbre de rotation (4) est agencé de façon équidistante de points médians respectifs du rail droit (2) et du rail courbe (3).

2. Système d'aiguillage pour systèmes de transport basés sur des véhicules guidés par rails selon la revendication 1, comprenant également un moteur (5) entraînant la plaque tournante (1) rotative, ledit moteur (5) étant monté sur la plaque tournante (1) rotative.

3. Système d'aiguillage pour systèmes de transport basés sur des véhicules guidés par rails selon la revendication 1 ou la revendication 2, dans lequel la plaque tournante (1) a une configuration rectangulaire définissant des premier et second grands côtés (11, 13) et des premier et second petits côtés (12), le rail droit (2) étant agencé près du premier grand côté (11) et le rail courbe (3) étant placé de telle sorte qu'il passe par les coins définis par le second grand côté (13) et les premier et second petits côtés (12).

4. Système d'aiguillage pour systèmes de transport basés sur des véhicules guidés par rails selon les revendications 2 et 3, dans lequel le moteur (5) est monté sur le second grand côté (13).

5. Système d'aiguillage pour systèmes de transport basés sur des véhicules guidés par rails selon la revendication 1, dans lequel ladite plaque tournante (1) comprend une pluralité de roues (6).

6. Système d'aiguillage pour systèmes de transport basés sur des véhicules guidés par rails selon la revendication 5, dans lequel lesdites roues (6) sont orientées vers l'arbre de rotation (4).

7. Système d'aiguillage pour systèmes de transport basés sur des véhicules guidés par rails selon les revendications 3 et 5, dans lequel les roues (6) de la plaque tournante (1) sont agencées sur les grands côtés (11, 13) de la plaque tournante (1).

8. Système d'aiguillage pour systèmes de transport basés sur des véhicules guidés par rails selon la revendication 1, dans lequel ladite plaque tournante (1) peut tourner entre une pluralité de positions, lesdites positions étant décalées de 45° l'une de l'autre.
